(19) Europäisches Patentamt
European Patent Office
Office européen des brevets

(11) Veröffentlichungsnummer: **0 129 511**
**B1**

(12) # EUROPÄISCHE PATENTSCHRIFT

(45) Veröffentlichungstag der Patentschrift: **22.07.87**

(51) Int. Cl.[4]: **C 07 F 9/65,** A 01 N 57/32

(21) Anmeldenummer: **84810281.0**

(22) Anmeldetag: **08.06.84**

(54) **Neue Amidine.**

(30) Priorität: **13.06.83 CH 3224/83**

(43) Veröffentlichungstag der Anmeldung:
**27.12.84 Patentblatt 84/52**

(45) Bekanntmachung des Hinweises auf die Patenterteilung:
**22.07.87 Patentblatt 87/30**

(84) Benannte Vertragsstaaten:
**BE CH DE FR IT LI NL**

(56) Entgegenhaltungen:
**SOVIET INVENTIONS ILLUSTRATED, Section Ch : Chemical, Woche D38, 28. Oktober 1981, Derwent Publications Ltd., Agricultural chemistry, Seite 1, Nr. 69182D/38, London, GB**
**JOURNAL OF GENERAL CHEMISTRY OF THE USSR, Band 52, Nr. 5, Teil 2, Mai 1982, Seiten 967-970, New York, US; O.A. KULIKOVA et al.: "Phosphorus-containings-triazinylureas"**

(73) Patentinhaber: **CIBA- GEIGY AG, Klybeckstrasse 141, CH- 4002 Basel (CH)**

(72) Erfinder: **Kristiansen Odd, Dr., Delligrabenstrasse 7, CH- 4313 Möhlin (CH)**
Erfinder: **Drabek, Josef, Dr., Benkenstrasse 12, CH-4104 Oberwil (CH)**
Erfinder: **Flück, Victor, Dr., Benkenstrasse 99, CH-4102 Binningen (CH)**

**EP 0 129 511 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft N-Phosphoryl- oder Thiophosphoryl-N'-s-triazinyl-formamidine, Verfahren zu ihrer Herstellung und ihre Verwendung in der Schädlingsbekämpfung.

Die N-Phosphoryl- oder Thiophosphoryl-N'-s-triazinyl-formamidine haben die Formel

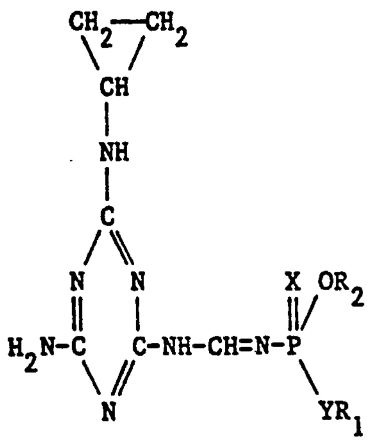

(I),

worin

$R_1$ und $R_2$ unabhängig voneinander $C_1$-$C_{20}$-Alkyl oder gegebenenfalls durch Halogen substituiertes Phenyl und

X und Y je Sauerstoff oder Schwefel bedeuten.

Die Verbindungen der Formel I können auch in ihrer tautomeren Form vorliegen.

Unter Halogen ist Fluor, Chlor, Brom oder Jod zu verstehen.

Die Alkylgruppen bei $R_1$ und $R_2$ können geradkettig oder verzweigt sein und haben in der Kette bevorzugt 1 bis 8, insbesondere aber 1 bis 4 Kohlenstoffatome. Beispiele solcher Gruppen sind u.a: Methyl, Aethyl, Propyl, Isopropyl, n-Butyl, n-Pentyl, n-Hexyl und deren Isomere.

Bevorzugt sind Verbindungen der Formel I, worin

$R_1$ $C_1$-$C_8$-Alkyl,

$R_2$ $C_1$-$C_6$-Alkyl oder gegebenenfalls durch ein bis drei Halogen substituiertes Phenyl und

X und Y je Sauerstoff oder Schwefel bedeuten.

Insbesondere bevorzugt sind Verbindungen der Formel I, worin $R_1$ $C_1$-$C_4$-Alkyl, $R_2$ $C_1$-$C_4$-Alkyl oder gegebenenfalls durch ein oder zwei Chloratome substituiertes Phenyl und X und Y je Sauerstoff oder Schwefel bedeuten.

Die Verbindungen der Formel I können nach an sich bekannten Methoden z.B. wie folgt hergestellt werden:

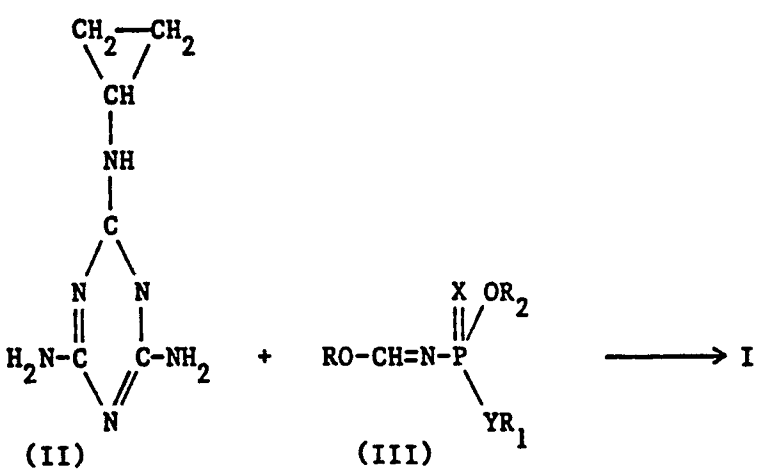

(II) (III)

In der Formel III haben $R_1$, $R_2$ und X die für die Formel I angegebene Bedeutung und R steht für $C_1$-$C_6$-Alkyl, insbesondere für Methyl oder Aethyl.

Das Verfahren wird bei einer Reaktionstemperatur zwischen -50°C und +130° C, vorzugsweise zwischen -10° C und +100° C, bei normalem oder leichterhöhtem Druck und gegebenenfalls in Gegenwart eines gegenüber den Reaktionsteilnehmern inerten Lösungs- oder Verdünnungsmittels vorgenommen.

Als Lösungs- oder Verdünnungsmittel eignen sich z.B. aliphatische und aromatische Kohlenwasserstoffe, insbesondere Benzol, Toluol, Xylole; Ketone wie Aceton, Methyläthylketon und Cyclohexanon.

Die Ausgangsstoffe der Formeln II und III sind bekannt bzw. können analog bekannten Methoden hergestellt werden.

Die Verbindungen der Formel I eignen sich zur Bekämpfung von verschiedenartigen Schädlingen an Tieren und Pflanzen. So können sie zur Bekämpfung von Insekten, z.B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und von Milben und Zecken der Ordnung Acarina eingesetzt werden.

Vor allem eignen sich Verbindungen der Formel I zur Bekämpfung von pflanzenschädigenden Insekten, insbesondere pflanzenschädigenden Frassinsekten, in Zier- und Nutzpflanzen, insbesondere in Baumwoll- und Reiskulturen (z.B. Spodoptera littoralis, Heliothis virescens, Nilaparvata lugens, Chilo suppressalis und Laodelphax) sowie Gemüse- und Obstkulturen (z.B. Leptinotarsa decemlineata, Myzus persicae, Laspeyresia pomonella und Adoxophyes reticulana) und von Bodeninsekten (z.B. Aulacophora femoralis, Chortophila brassicae, Diabrotica balteata, Pachnoda savigni und Scotia ypsilon).

Wirkstoffe der Formel I zeigen auch eine sehr günstige Wirkung gegen Fliegen, wie z.B. Musca domestica sowie Mückenlarven und gegen ektoparasitäre Milben und Zecken, z.B. der Familien Ixodidae, Argasidae und Dermanyssidae. Daneben zeichnen sich die Verbindungen der Formel I durch eine breite ovizide und ovolarvizide Wirkung aus.

Ausserdem besitzen die Verbindungen der Formel (I) ausserordentlich gute nematizide Eigenschaften und können beispielsweise zur Bekämpfung von a) pflanzenparasitärer Nematoden wie z.B: Meloidogyne spp., Heterodera spp., Dithylenchus spp., Pratylenchus spp., Paratylenchus spp., Anguina spp., Helicotylenchus spp., Tylenchorhynchus spp., Rotylenchuslus spp., Tylenchulus semipenetrans, Radopholus similus, Belonolaismus spp., Trichodorus spp., Longidorus- spp., Aphelenchoides spp., Xiphinema spp., und b) endoparasitären Nematoden der Ordnungen Dracunculoidea, Ascaroidea (z.B. Ascaridia galli), Trichinelloidea, Strongyloidea, Trichostrongyloidea, Metastrongyloidea oder zur Bekämpfung von Cestoden der Familien Dilepididae (z.B. Hymenolepis nana), Taeniidae, Diphyllobotridae oder zur Bekämpfung von Trematoden der Familien Dicrocoelidae, Fasciolidae (z.B. Fasciola hepatica), Schistosamatidae (z.B. Schistosoma bovis) bei Haus- und Nutztieren, wie Rindern, Schafen, Ziegen, Pferden, Schweinen, Katzen, Hunden und Geflügel, eingesetzt werden.

– Die akarizide bzw. insektizide Wirkung lässt sich durch Zusatz von anderen Insektiziden und/oder Akariziden wesentlich verbreitern und an gegebene Umstände anpassen. Als Zusätze eignen sich z.B. andere org. Phosphorverbindungen; Nitrophenole und deren Derivate; Formanidine; Harnstoffe sowie pyrethrinartige Verbindungen sowie Karbamate und chlorierte Kohlenwasserstoffe.

Mit besonderem Vorteil werden Verbindungen der Formel I auch mit Substanzen kombiniert, welche einen synergistischen oder verstärkenden Effekt ausüben. Beispiele solcher Verbindungen sind u.a. Piperonylbutoxid, Propionyläther, Propinyloxime, Propinylcarbamate und Propinylphosphonate, 2-(3,4-Methylendioxyphenoxy)-3,6,9-trioxa-undecan (Sesamex resp. Sesoxane), S,S,S-Tributylphosphorotrithioate, 1,2-Methylendioxy-4-(2-(octylsulfinyl)-propyl)-benzol.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lüsungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahen wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebemenfalls einem festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäure von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendianinopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxydaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Annoniumsalze, welche als N-Substituenten mindestens einen Alkylrest mit 8 bis 22-C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthyl-ammoniumbromid.

Die in der Formulierungstechnik gebräuchlichen Tenside sind u.a. in folgender Publikation beschrieben:

"McCutcheon's Detergents and Emulsifiers Annual" MC Publishing Corp., Ridgewood, New Jersey, 1979; Dr. Helmut Stache "Tensid Taschenbuch", Carl Hanser Verlag München/Wien 1981.

Die pestiziden Zubereitungen enthalten in der Regel 0,1 bis 99 %, insbesondere 0,1 bis 95 %, Wirkstoff der Formel 1, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel Haftmittel sowie Dünger oder andere Wirkstoffe zur Erzielung spezieller Effekte enthalten.

**Formulierungsbeispiele für flüssige Wirkstoffe der Formel 1 (% = Gewichtsprozent)**

| 1. Emulsions-Konzentrate | a) | b) | c) |
|---|---|---|---|
| Wirkstoff | 25 % | 40 % | 50 % |
| Ca-Dodecylbenzolsulfonat | 5 % | 8 % | 6 % |
| Ricinusöl-polyäthylenglykoläther (36 Mol AeO) | 5 % | - | - |
| Tributylphenol-polyäthyklenglykoläther (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff | 80 % | 10 % | 5 % | 95 % |
| Aethylenglykol-monomethyläther | 20 | - | - | - |
| Polyäthylenglykol M.G. 400 | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| 3. Granulate | a) | b) |
|---|---|---|
| Wirkstoff | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

**Formulierungsbeispiele für feste Wirkstoffe der Formel I (% = Gewichtsprozent)**

| 5. Spritzpulver | a) | b) | c) |
|---|---|---|---|
| Wirkstoff | 20 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 67 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 6. Emulsions-Konzentrat | |
|---|---|
| Wirkstoff | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit dem Träger vermischt und auf einer geeigneten Mühle vermahlen wird.

| 8. Extruder Granulat | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusstzstoffen vermischt, vermahlen und mit Wasser angefeuchtet. Dieses Gemisch wird extrudiert und anschliessend im Luftstrom getrocknet.

| 9. Umhüllungs-Granulat | |
|---|---|
| Wirkstoff | 3 % |
| Polyäthylenglykol (M.G. 200) | 3 % |
| Kaolin | 94 % |

Der feingemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| 10. Suspensions-Konzentrat | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

**Beispiel 1:**

Herstellung der Verbindung der Formel

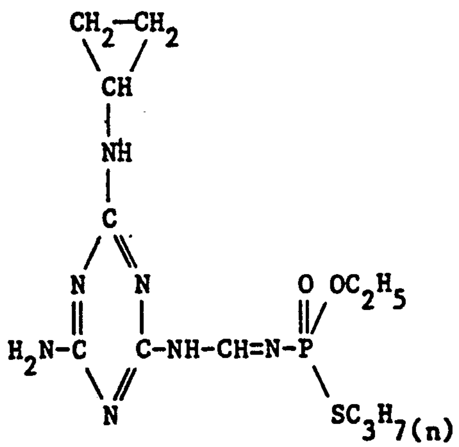

Nr. 1

Zu einer Aufschlämmung von 8,3 g 2-Cyclopropylamino-4,6-diamino-s-triazin in 150 ml Dioxan werden bei 20° C 12,75 g N-(0-Aethyl-S-n-propyl-thiolophosphoryl)-iminoameisensäureäthylester getropft. Das Gemisch wird 15 Stunden unter Rückfluss gekocht, heiss filtriert und eingedampft.

Nach der chromatographischen Reinigung (Kieselgel; Eluiermittel 90 % Chloroform, 10 % Aethanol) erhält man die Titelverbindung mit einem Schmelzpunkt von 206-208° C.

Auf analoge Weise werden auch folgende Verbindungen hergestellt

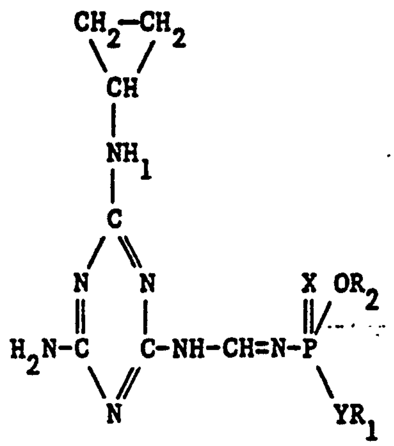

| Nr. | $R_1$ | $R_2$ | X | Y | Physikalische Daten |
|---|---|---|---|---|---|
| 2 | $CH_3$ | $CH_3$ | O | S | 200-202° |
| 3 | 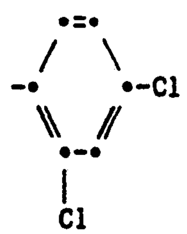 | $C_2H_5$ | S | O | amorph |
| 4 | $C_2H_5$ | $C_2H_5$ | S | O | Smp.:226-229° C |
| 5 | 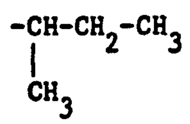 | $C_2H_5$ | O | S | Smp.:173-176° |
| 6 | $C_2H_5$ | $C_2H_5$ | O | S | Smp.:183-186° |
| 7 | $C_8H_{17}(n)$ | $C_2H_5$ | O | S | Smp.:166-167° |

**Beispiel 2:**

Insektizide Frassgift-Wirkung

Baumwollpflanzen werden mit einer Versuchslösung, enthaltend 25, 50 und 100 pm der zu prüfenden Verbindung, besprüht.

Nach dem Antrocknen des Belages werden die Baumwollpflanzen mit Spodoptera littoralis-Larven L-1 besetzt. Der Versuch wird bei 24° C und 60 % relativer Luftfeuchtigkeit durchgeführt.

Verbindungen gemäss Beispiel 1 zeigen im obigen Test die in der folgenden Tabelle aufgeführte Frassgift-Wirkung gegen Spodoptera-Larven.

Biologische Versuchsergebnisse

In der nachfolgenden Tabelle sind Versuchsergebnisse auf der Basis des vorstehenden Beispiels aufgeführt, und zwar mit folgendem Bewertungsindex in bezug auf die prozentuale Abtötung der Schädlinge:

A: 80-100 % Abtötung bei 25 ppm Wirkstoffkonzentration
B: 80-100 % Abtötung bei 50 ppm Wirkstoffkonzentration
C: 80-100 % Abtötung bei 100 ppm Wirkstoffkonzentration

| Nr. | Wirkung gegen Spodoptera littoralis Larven $L_3$ |
|---|---|
| 1 | A |
| 2 | A |
| 3 | C |
| 4 | B |
| 5 | B |
| 6 | A |
| 7 | B |

**Beispiel 3:**

Wirkung gegen Diabrotica balteata

750 ml Komposterde werden mit 150 ml Testlösung enthaltend 3 ppm Wirkstoff gemischt. Mit der behandelten Erde werden Maiskeimlinge in Plastiktöpfe eingetopft (4 Keimlinge pro Topf mit einem Durchmesser von 10 cm). Die Töpfe werden unmittelbar nachher mit 10 $L_3$-Larven von Diabrotica balteata infestiert. Die Kontrolle wird 10 Tage nach dem Einsetzen der Larven durchgeführt.

Verbindungen gemäss Beispiel 1 zeigen im obigen Test 100 %ige Wirkung gegen $L_3$-Larven von Diabrotica balteata.

**Beispiel 4:**

Insektizide Frassgift-Wirkung: Nilaparvata lugens

Reispflanzen werden mit einer Versuchslösung, enthaltend 50 ppm der zu prüfenden Verbindung, besprüht. Nach dem Antrocknen des Belages werden die Pflanzen mit Larven von Nilaparvata lugens (L3-Stadium) besetzt. Man verwendet pro Versuchsverbindung und pro Test-Spezies zwei Pflanzen. Die Auswertung der erzielten Abtötungsrate erfolgt nach 24 Stunden. Der Versuch wird bei 22°C und 60 % relativer Luftfeuchtigkeit durchgeführt.

Verbindungen gemäss Beispiel 1 zeigen im obigen Test 100 % Wirkung gegenüber Nilaparvata lugens Larven.

**Beispiel 5:**

Wirkung gegen Bodennematoden

Zur Prüfung der Wirkung gegen Bodennematoden wird der Wirkstoff in einer Konzentration von 50 ppm in durch Wurzelgallen-Nematoden (Meloidogyne arenaria) infizierte Erde gegeben und innig vermischt. In die so vorbereitete Erde werden in einer Versuchsreihe umittelbar danach Tomatensetzlinge gepflanzt und in einer andern Versuchsreihe nach 8 Tagen Wartezeit Tomatensamen eingesät.

Zur Beurteilung der nematoziden Wirkung werden 28 Tage nach dem Pflanzen bzw. nach der Saat die an den Wurzeln vorhandenen Gallen ausgezählt. Verbindungen gemäss Beispiel 1 zeigen im obigen Test 100 % Wirkung gegen Meloidogyne arenaria.

**Beispiel 6:**

a) Rhipicephalus bursa

Je adulte Zecken bzw. 50 Zeckenlarven wurden in ein Glasröhrchen gezählt und für 1 bis 2 Minuten in 2 ml einer wässrigen Emulsion aus einer Verdünnungsreihe mit je 100, 10, 1 oder 0,1 ppm Testsubstanz getaucht. Das Röhrchen wurde dann mit einem genormten Wattebausch verschlossen und auf den Kopf gestellt, damit die Wirkstoffemulsion von der Watte aufgenomnen werden konnte.

Die Auswertung erfolgte bei den Adulten nach 2 Wochen und bei den Larven nach 2 Tagen. Für jeden Versuch liefen 2 Wiederholungen.

b) Boophilus microplus (Larven)
Mit einer analogen Verdünnungsreihe wie beim Test a) wurden mit je 20 sensiblen resp. OP-resistenten Larven Versuche durchgeführt. (Die Resistenz bezieht sich auf die Verträglichkeit von Diazinon.) Verbindungen gemäss Beispiel 1 zeigten innerhalb der oben angegebenen Konzentrationsgrenzen 100%-ige Wirkung gegen Adulte und Larven von Rhipicephalus bursa und sensible resp. OP-resistente Larven von Boophilus microplus.

**Patentansprüche**

1. N-Phosphoryl- oder Thiophosphoryl-N'-s-triazinyl-formamidine der Formel

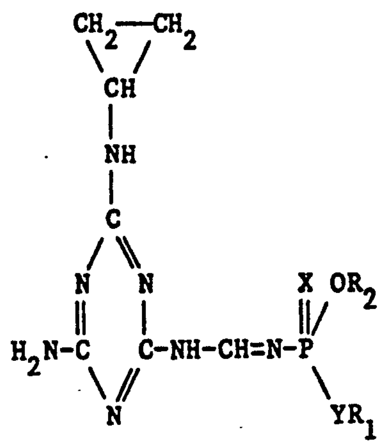

(I),

worin $R_1$ und $R_2$ unabhängig voneinander $C_1$-$C_{20}$-Alkyl oder gegebenenfalls durch Halogen substituiertes Phenyl und X und Y je Sauerstoff oder Schwefel bedeuten.

2. Verbindungen gemäss Anspruch 1, worin $R_1$ $C_1$-$C_8$-Alkyl, $R_2$ $C_1$-$C_6$-Alkyl oder gegebenenfalls durch ein bis drei Halogen substituiertes Phenyl und X und Y je Sauerstoff oder Schwefel bedeuten.

3. Verbindungen gemäss Anspruch 2, worin $R_1$ $C_1$-$C_4$-Alkyl, $R_2$ $C_1$-$C_4$-Alkyl oder gegebenenfalls durch ein oder zwei Chloratome substituiertes Phenyl, und X und Y je Sauerstoff oder Schwefel bedeuten.

4. Die Verbindung gemäss Anspruch 3 der Formel

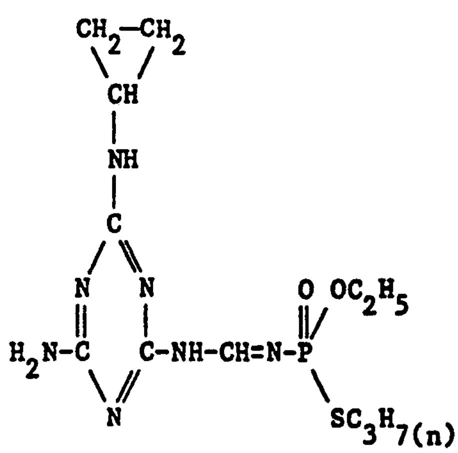

5. Die Verbindung gemäss Anspruch 3 der Formel

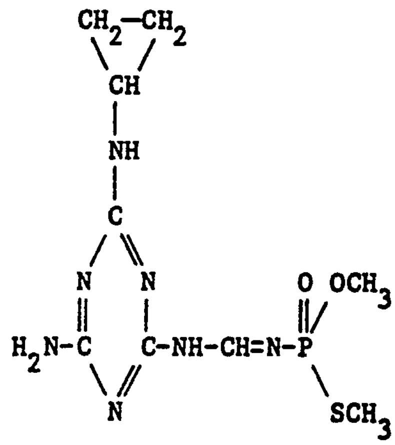

6. Die Verbindung gemäss Anspruch 3 der Formel

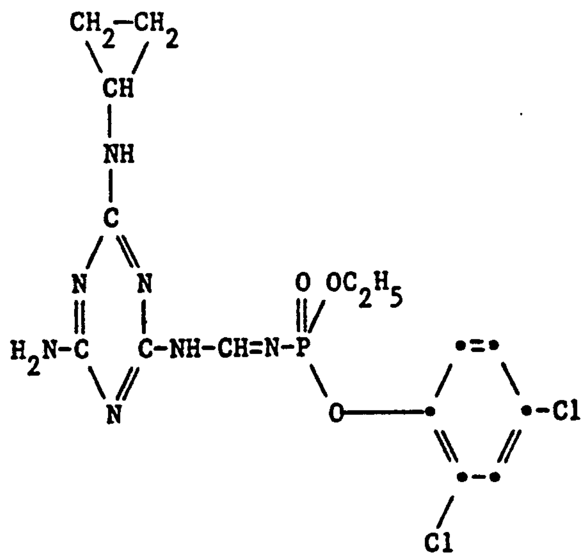

7. Die Verbindung gemäss Anspruch 3 der Formel

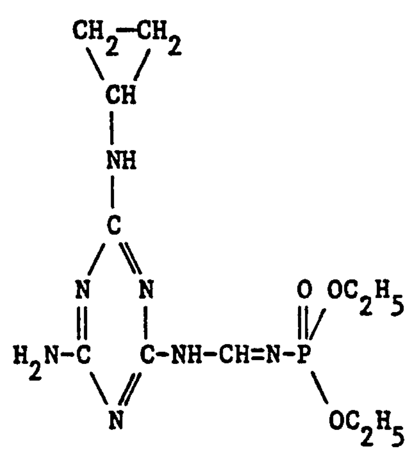

8. Die Verbindung gemäss Anspruch 3 der Formel

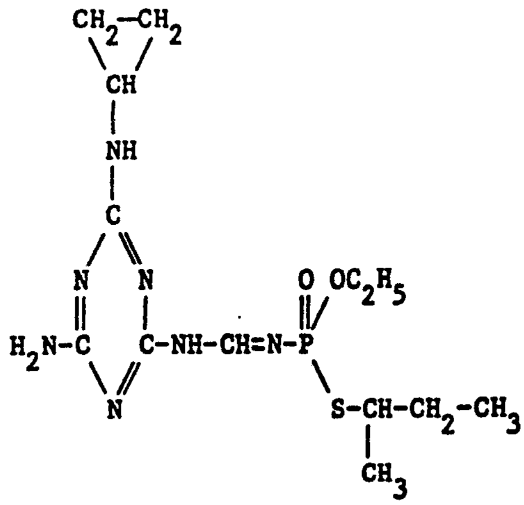

9. Die Verbindung gemäss anspruch 3 der Formel

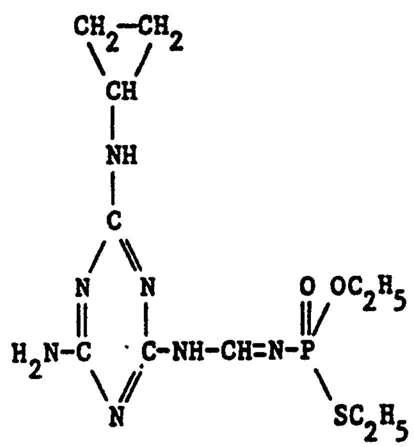

10. Die Verbindung gemäss Anspruch 2 der Formel

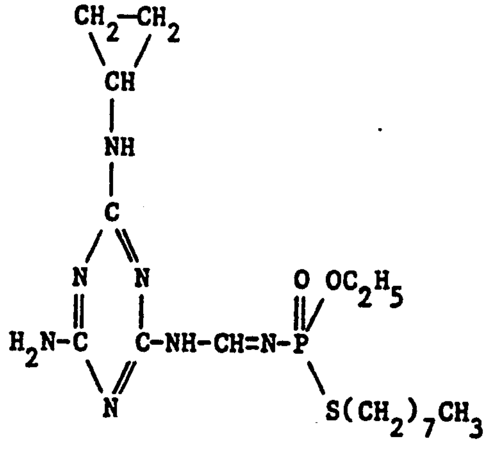

11. Verfahren zur Herstellung von Verbindungen gemäss Anspruch 1, dadurch gekennzeichnet, dass man die Verbindung der Formel

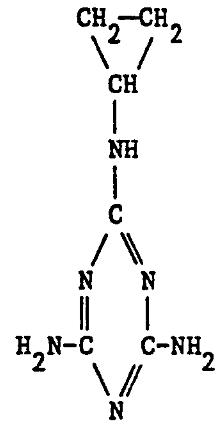

mit einer Verbindung der Formel

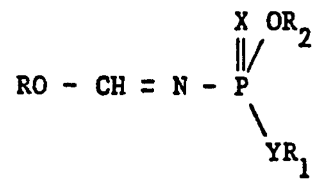

umsetzt, worin $R_1$, $R_2$, X und Y die im Anspruch 1 angegebene Bedeutung haben und R für ein $C_1$-$C_6$-Alkyl steht.

12. Ein Schädlingsbekämpfungsmittel, welches als aktive Komponente eine Verbindung gemäss Anspruch 1 und in der Formulierungstechnik übliche Hilfsmittel enthält.

13. Die Verwendung einer Verbindung gemäss Anspruch 1 zur Bekämpfung von Schädlingen an Tieren, Pflanzen und im Boden.

14. Die Verwendung gemäss Anspruch 13 zur Bekämpfung von Insekten und Vertretern der Ordnung Akarina.

15. Verfahren zur Bekämpfung von verschiedenartigen Schädlingen an Tieren, Pflanzen und im Boden, dadurch gekennzeichnet, dass man eine Verbindung gemäss Anspruch 1 auf die Tiere und Pflanzen oder auf dem Boden appliziert.

**Claims**

1. An N-phosphoryl- or thiophosphoryl-N'-s-triazinylformamidine of the formula

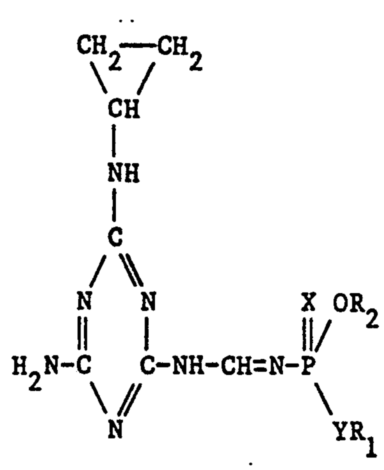

(I)

wherein

$R_1$ and $R_2$ are each independently of the other $C_1$-$C_{20}$-alkyl, or phenyl unsubstituted or substituted by halogen, and

X and Y are each oxygen or sulfur.

2. A compound according to claim 1, wherein
$R_1$ is $C_1$-$C_8$-alkyl,
$R_2$ is $C_1$-$C_6$-alkyl, or phenyl unsubstituted or substituted by one to three halogen atoms, and
X and Y are each oxygen or sulfur.

3. A compound according to claim 2, wherein
$R_1$ is $C_1$-$C_4$-alkyl,
$R_2$ is $C_1$-$C_4$-alkyl, or phenyl unsubstituted or substituted by one or two chlorine atoms, and
X and Y are each oxygen or sulfur.

4. The compound according to claim 3 of the formula

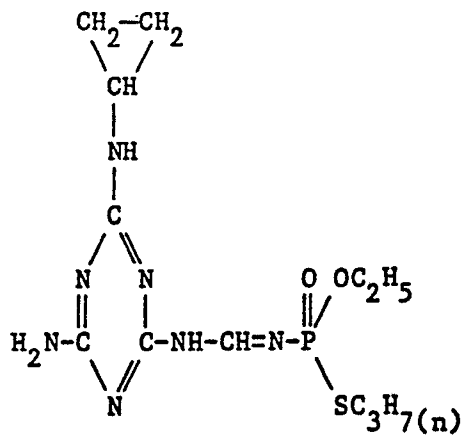

5. The compound according to claim 3 of the formula

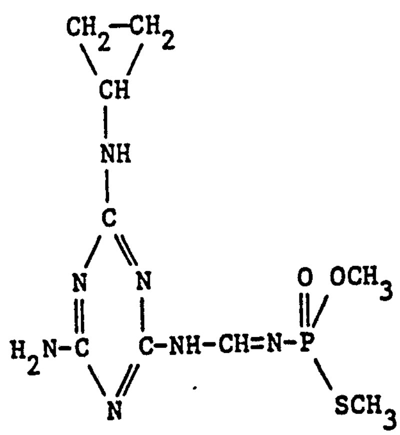

6. The compound according to claim 3 of the formula

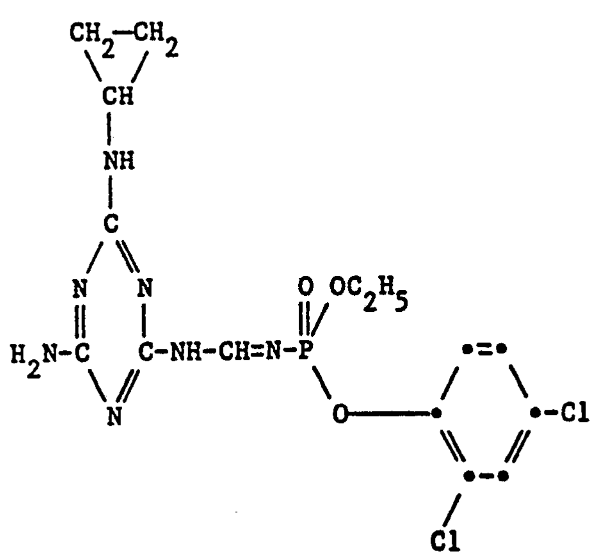

7. The compound according to claim 3 of the formula

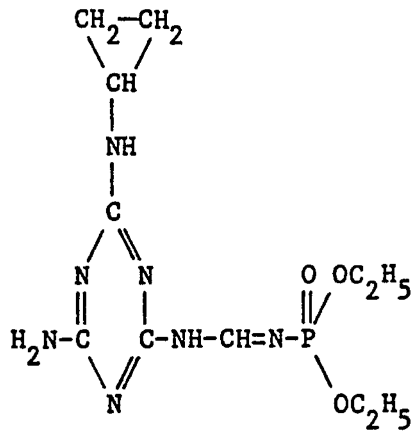

8. The compound according to claim 3 of the formula

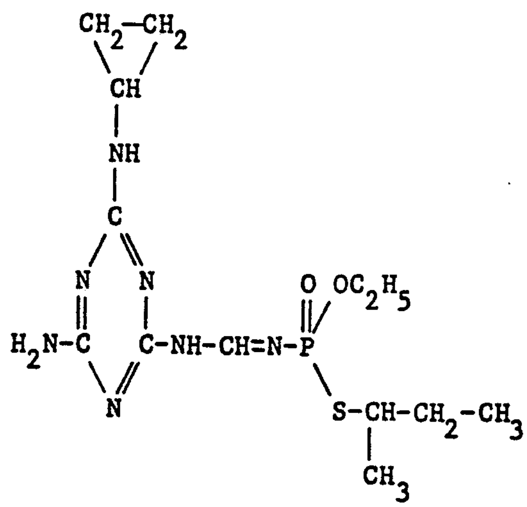

9. The compound according to claim 3 of the formula

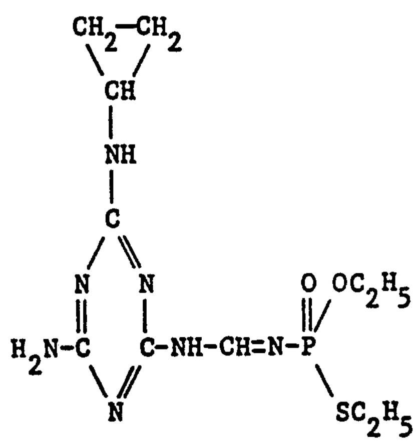

10. The compound according to claim 2 of the formula

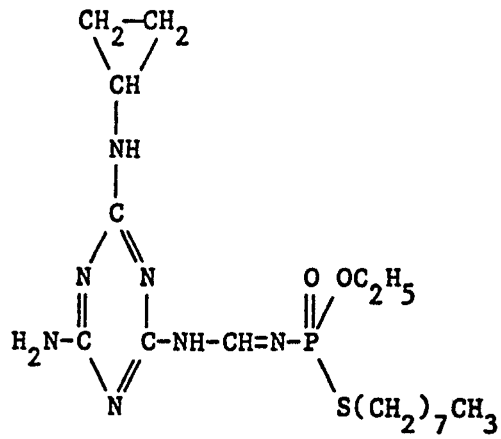

11. A process for the preparation of a compound according to claim 1, which process comprises reacting the compound of the formula

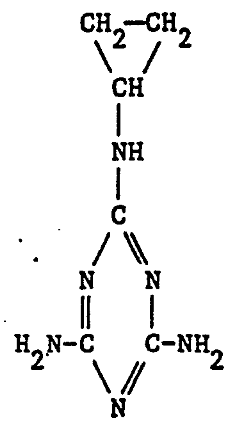

with a compound of the formula

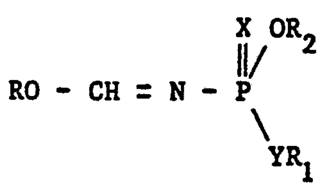

,

wherein $R_1$, $R_2$, X and Y are as defined in claim 1, and R is $C_1$-$C_6$-alkyl.

12. A pesticidal composition which contains as active ingredient a compound according to claim 1, together with auxiliaries customarily used in formulation practice.

13. Use of a compound according to claim 1 for controlling pests on animals and plants and in the soil.

14. Use according to claim 13 for controlling insects and members of the order Acarina.

15. A method of controlling various pests on animals and plants and in the soil, which method comprises applying to the animals and plants or to the soil a compound according to claim 1.

**Revendications**

1. N-Phosphoryl- ou Thiophosphoryl-N'-s-triazinylformamidines de formule

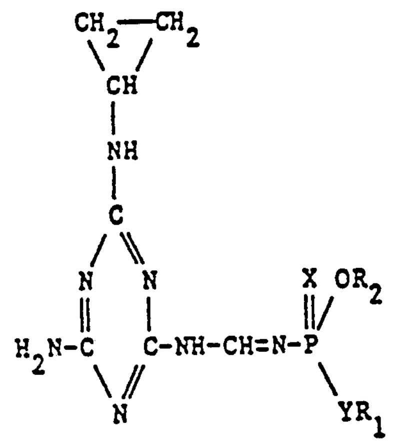

(I),

où $R_1$ et $R_2$ représentent indépendamment l'un de l'autre un alcoyle en $C_1$ à $C_{20}$ ou un phényle éventuellement substitué par un halogène et

X et Y représentent chacun un oxygène ou un soufre.

2. Composés selon la revendication 1, où $R_1$ représente un alcoyle en $C_1$ à $C_8$, $R_2$ représente un alcoyle en $C_1$ à $C_6$ ou un phényle éventuellement substitué par de 1 à 3 halogènes et X et Y représentent chacun un oxygène ou un soufre.

3. Composés selon la revendication 2, où

$R_1$ représente un alcoyle en $C_1$ à $C_4$,

$R_2$ représente un alcoyle en $C_1$ à $C_4$, ou un phényle éventuellement substitué par un ou deux atomes de chlore, et

X et Y représentent chacun un oxygène ou un soufre.

4. Le composé selon la revendication 3 de formule

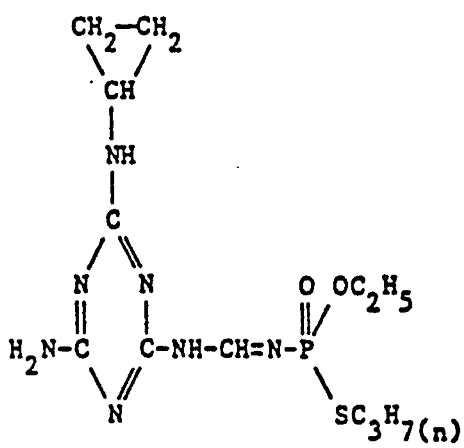

5. Le composé selon la revendication 3 de formule

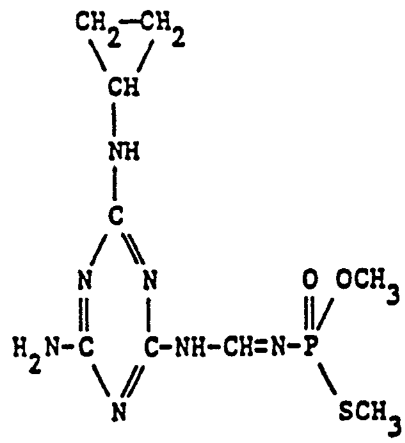

6. Le composé selon la revendication 3 de formule

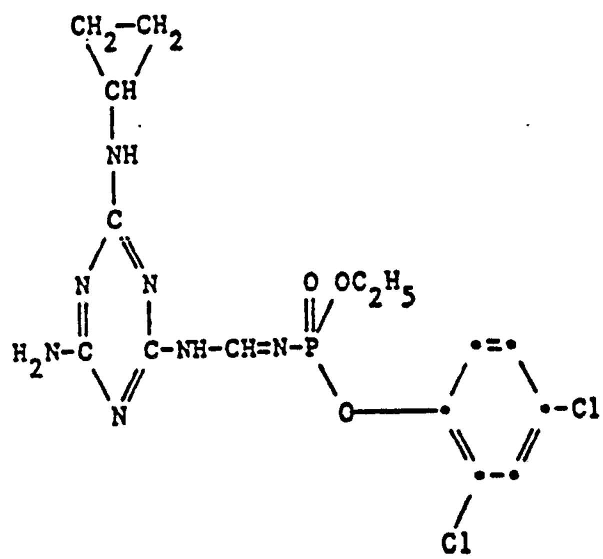

7. Le composé selon la revendication 3 de formule

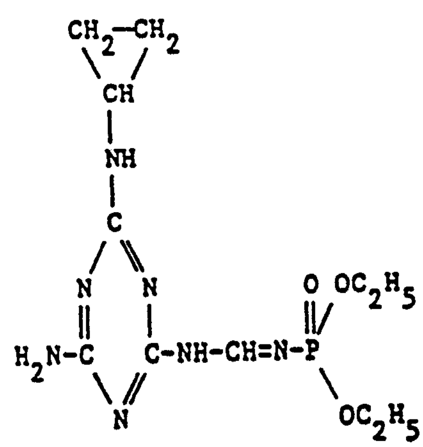

8. Le composé selon la revendication 3 de formule

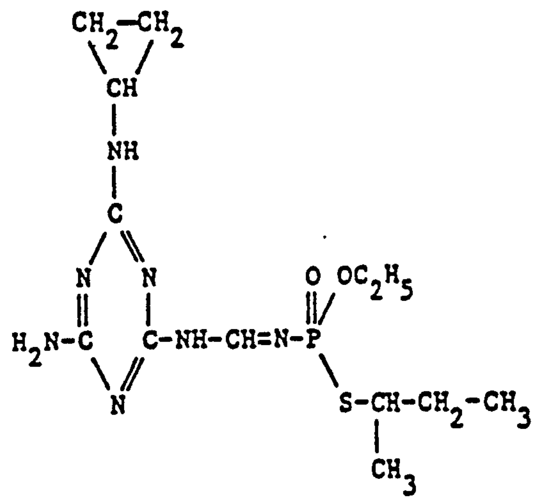

9. Le composé selon la revendication 3 de formule

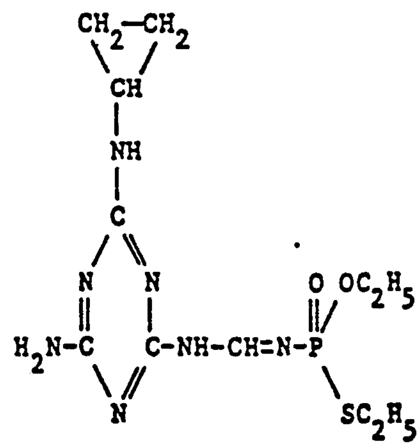

10. Le composé selon la revendication 2 de formule

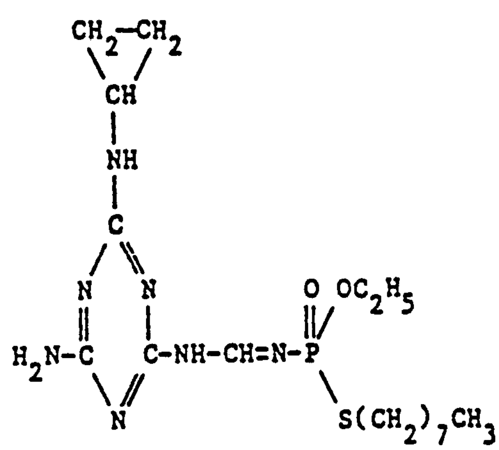

11. Procédé de préparation de composés selon la revendication 1, caractérisé en ce qu'on fait réagir le composé de formule

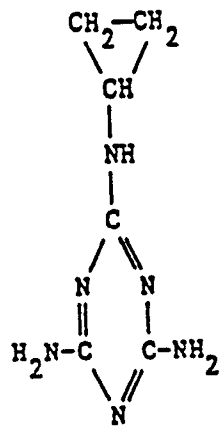

avec un composé de formule

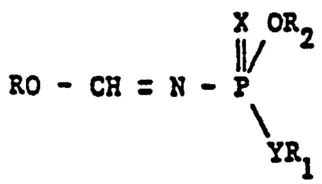

où $R_I$, $R_2$, X et Y ont la signification donnée dans la revendication 1 et R représente un alcoyle en $C_I$ à $C_6$.

12. Agents de lutte antiparasitaire contenant comme composants actifs un composé selon la revendication 1 et les additifs habituels dans la technique de formulation.

13. Application d'un composé selon la revendication 1 pour combattre les parasites chez les animaux, les végétaux et dans le sol.

14. Application selon la revendication 13 pour combattre les insectes et les représentants de l'ordre des acariens.

15. Procédé de lutte contre diverses espèces de parasites chez les animaux, les végétaux et dans le sol, caractérisé en ce qu'on applique un composé selon la revendication 1 sur les animaux et les plantes ou sur le sol.